(19) Europäisches Patentamt
European Patent Office
Office européen des brevets

(11) **EP 3 760 750 B1**

(12) **EUROPEAN PATENT SPECIFICATION**

(45) Date of publication and mention of the grant of the patent:
**17.08.2022 Bulletin 2022/33**

(21) Application number: **19759981.4**

(22) Date of filing: **22.02.2019**

(51) International Patent Classification (IPC):
*C22B 47/00* (2006.01)    *C21C 7/00* (2006.01)
*C21C 1/02* (2006.01)    *C21C 7/064* (2006.01)

(52) Cooperative Patent Classification (CPC):
**C21C 7/064; C21C 1/025; C21C 7/00; C22B 47/00**

(86) International application number:
**PCT/JP2019/006849**

(87) International publication number:
**WO 2019/167841 (06.09.2019 Gazette 2019/36)**

(54) **METHOD FOR MANUFACTURING MANGANESE RAW MATERIAL AND METHOD FOR SMELTING MANGANESE-CONTAINING STEEL**

VERFAHREN ZUR HERSTELLUNG VON MANGANROHMATERIAL UND VERFAHREN ZUM SCHMELZEN VON MANGANHALTIGEM STAHL

PROCÉDÉ POUR LA PRODUCTION DE MATIÈRE PREMIÈRE AU MANGANÈSE ET PROCÉDÉ POUR LA FUSION D'ACIER CONTENANT DU MANGANÈSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2018 JP 2018036865**

(43) Date of publication of application:
**06.01.2021 Bulletin 2021/01**

(73) Proprietor: **JFE Steel Corporation**
**Tokyo 100-0011 (JP)**

(72) Inventors:
• **ODA Nobuhiko**
**Tokyo 100-0011 (JP)**
• **HINO Yuta**
**Tokyo 100-0011 (JP)**
• **TAKAKI Yuki**
**Tokyo 100-0011 (JP)**
• **NISHINA Yoshiaki**
**Tokyo 100-0011 (JP)**
• **KIKUCHI Naoki**
**Tokyo 100-0011 (JP)**

(74) Representative: **Grünecker Patent- und Rechtsanwälte**
**PartG mbB**
**Leopoldstraße 4**
**80802 München (DE)**

(56) References cited:
**CN-A- 101 113 496    CN-A- 105 866 387**
**GB-A- 1 002 029    JP-A- 2017 205 715**
**JP-B1- S39 801**

**Description**

Technical Field

The present invention relates to a method for manufacturing a manganese raw material and a method for manufacturing manganese-containing molten steel.

Background Art

Along with the recent need for vehicle body weight reduction in automobiles and the like, there has been an increasing demand for high-strength steel sheets, which are called high-tensile strength steel materials. In such high-tensile strength steel materials, typically, a metal such as manganese (Mn) is added to provide high tensile strength.

Examples of manganese raw materials mainly used include manganese oxide-containing materials typified by manganese ores, ferromanganese, and metallic manganese. The cost (unit price) per pure manganese is reduced in order of manganese ores, ferromanganese, and metal manganese. Thus, cost reduction can be achieved by selecting a manganese oxide-containing material typified by manganese ore as a manganese raw material.

However, manganese ores and ferromanganese, which are generally inexpensive manganese raw materials, contain much impurities typified by carbon (C) and phosphorus (P), and particularly contain P in an amount of about from 0.02% by mass to 0.2% by mass. Due to this, when manufacturing manganese-containing hot metal or manganese-containing molten steel (hot metal and molten steel are also collectively referred to as "molten iron") by using such inexpensive manganese raw materials, it is necessary to dephosphorize the manganese-containing molten iron, because P contained in the manganese raw materials moves to the manganese-containing molten iron.

An example known as a method for dephosphorizing molten iron having high manganese content is a method described in PTL 1. PTL 2 - PTL 4 further disclose a method for manufacturing a manganese raw material from a manganese oxide-containing material.

Citation List

Patent Literature

PTL 1: JP H7-034114 A

PTL 2: JP 2017 205715 A

PTL 3: CN 101 113 496 A

PTL 4: GB 1 002 029

Summary of Invention

Technical Problem

The method described in PTL 1 uses a flux containing BaO or Ba such as $BaCO_3$, $Ba(OH)_2$, $BaSO_4$, $BaCl_2$, or $BaF_2$. However, BaO generated is specified as a deleterious substance in Japan, and handling thereof is regulated by law. Therefore, the method of PTL 1 using the Ba-containing flux is still problematic in terms of slag treatment and the like.

In manufacturing manganese-containing molten iron, usable amounts of inexpensive manganese raw materials such as a manganese oxide-containing material and ferromanganese are controlled by P standard (an upper limit of P concentration) of product. Therefore, when manufacturing high manganese molten steel having a high manganese content of 3% by mass or more, it is inevitable to increase the proportion of use of metal manganese low in P concentration and high in cost as a manganese raw material, which has thus caused a problem of extremely high cost of manufacturing.

Accordingly, the present invention has been made in view of the above problem. It is an object of the present invention to provide a method for manufacturing a manganese raw material and a method for manufacturing manganese-containing molten steel that can reduce cost for manufacturing manganese-containing molten iron by recovering a manganese raw material having low impurity concentration from a manganese oxide-containing material.

Solution to Problem

According to one aspect of the present invention, there is provided a method for manufacturing a manganese raw material as disclosed in appended claim 1.

According to one aspect of the present invention, there is provided a method for manufacturing manganese-containing molten steel including adding the manganese raw material recovered by the above-described method for manufacturing a manganese raw material to hot metal or molten steel to adjust a manganese concentration of the hot metal or the molten steel.

Advantageous Effects of Invention

According to the present invention, the method for manufacturing a manganese raw material and the method for manufacturing manganese-containing molten steel are provided that can reduce cost for manufacturing manganese-containing molten iron by recovering a manganese raw material having low impurity concentration from a manganese oxide-containing material typified by manganese ore.

Brief Description of Drawings

FIG 1 is a flowchart illustrating a method for manufacturing a manganese raw material according to a first embodiment of the present invention;
FIG 2 is a schematic diagram illustrating a mechanism of the method for manufacturing a manganese raw material according to the first embodiment of the present invention;
FIG 3 is a flowchart illustrating a method for manufacturing a manganese raw material according to a second embodiment of the present invention; and
FIG 4 is a graph illustrating results of Example 3.

Description of Embodiments

Manganese ore, which is one of manganese oxide-containing materials, contains mainly oxides and sulfides of Ca, Si, Mg, Al, Fe and P as components other than manganese. Herein, the manganese oxide means that a manganese compound contains $MnFe_2O_4$ as a spinel phase and at least oxygen as an element, and includes a silicate typified by $Mn_7SiO_{12}$.

Before the present invention, the present inventors investigated mineral phases of manganese ore by using X-ray diffraction (XRD) and an electron probe micro analyzer (EPMA) . As a result, it has been confirmed that Mn-containing phases are present in forms of non-magnetic $MnO_2$, a ferromagnetic spinel compound (hereinafter also referred to as "spinel phase") typified by $MnFe_2O_4$, and a weakly magnetic silicate (hereinafter also referred to as "silicate phase") typified by $Mn_7SiO_{12}$. Herein, the ferromagnetic material, the weakly magnetic material, and the non-magnetic material are classified by the magnitude of magnetic permeability, and when magnetic separation is performed under a certain magnetic field strength, materials are determined as ferromagnetic, weakly magnetic, and non-magnetic in a descending order from the most easily magnetized to the least easily magnetized. On the other hand, P-containing phases have been confirmed to primarily contain a compound phase of non-magnetic $nCaO·P_2O_5$ (hereinafter also referred to as "$nCaO·P_2O_5$ phase") . It has been also confirmed that the P-containing phases have a size of about from 1 $\mu$m to 100 $\mu$m although varying depending on minerals, and even more are present in phases different from the Mn-containing phases.

From the above-described findings, the present inventors focused on the difference of magnetic characteristics between the Mn-containing phases and the P-containing phases, and as a result of intensive investigation, have found a method capable of effectively separating impurities from a manganese oxide-containing material typified by manganese ore through pulverization and magnetic separation.

Note that the following description will be given of numerous specific details by exemplifying embodiments of the present invention to provide full understanding of the present invention. However, it is obvious that one or more embodiments can be implemented without the description of such specific details. Furthermore, the drawings schematically illustrate known structures and devices for the sake of simplicity.

<First Embodiment>

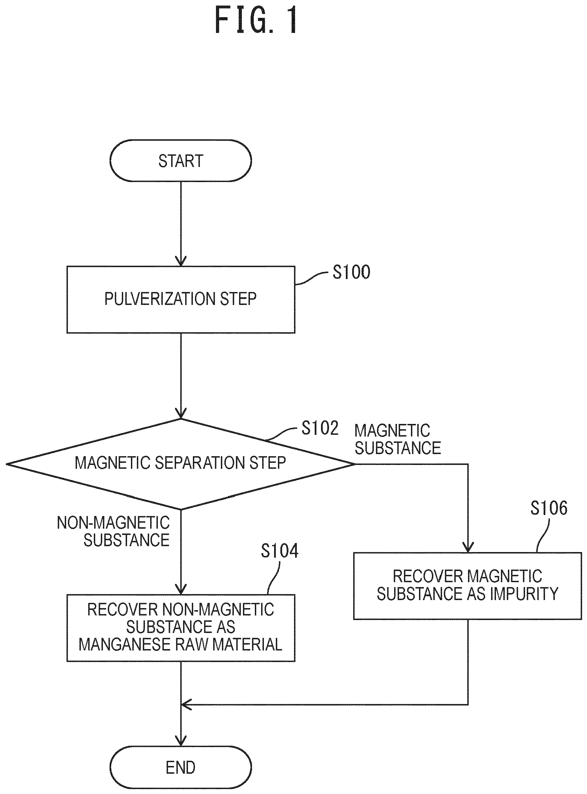

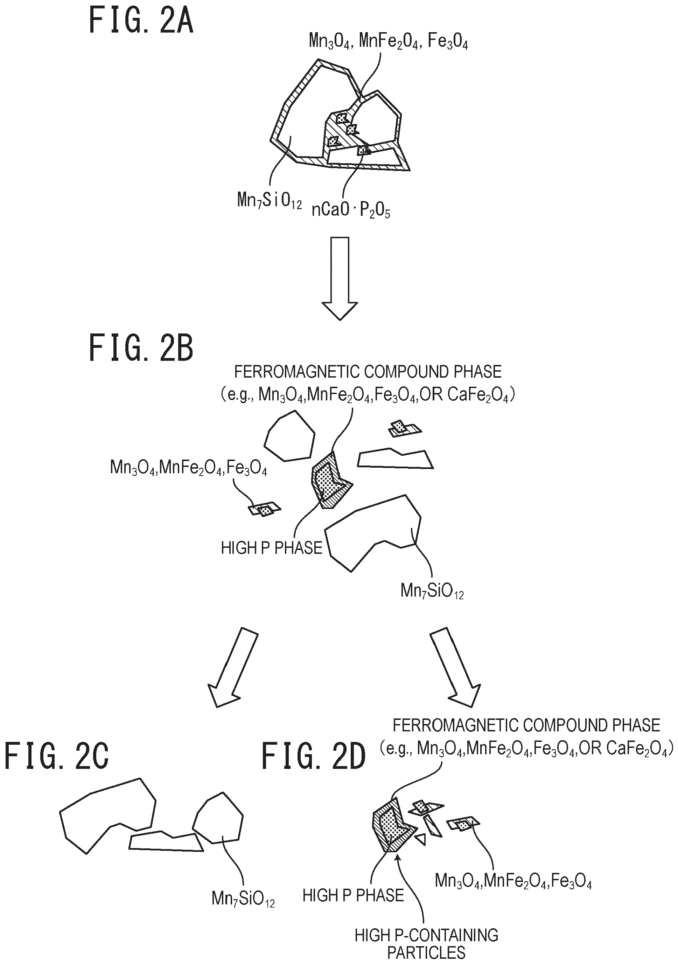

A method for manufacturing a manganese raw material according to a first embodiment of the present invention will be described with reference to FIGS. 1 and 2. A manganese oxide-containing material used in the first embodiment contains at least manganese, calcium, silicon, iron, and phosphorus, as typified by manganese ore. Additionally, most of the manganese, calcium, silicon, iron, and phosphorus are contained as oxides in the manganese oxide-containing material. Although there are no other limitations on the manganese oxide-containing mineral than those above, it is preferable to use a manganese oxide-containing material that contains a manganese silicate compound in order to effectively recover the manganese raw material.

First, as illustrated in FIG 1, a pulverization step of pulverizing a manganese oxide-containing material as a raw material is performed (S100). The method for pulverization in the pulverization step is not limited as long as it is a method capable of pulverizing the manganese oxide-containing material into a predetermined size. However, for a reason described later, preferred is a pulverization method for pulverizing the manganese oxide-containing material by applying pressure. Pulverization methods by applying pressure are those using a ball mill, a rod mill, a roller mill, or the like. In addition, the time of pulverization by a ball mill or a rod mill is set to preferably 1 hour or more, and the pressure to be applied during pulverization by a roller mill is set to preferably 3 MPa or more.

The manganese oxide-containing material after pulverization (hereinafter also referred to as "pulverized manganese oxide-containing material") may have any particle size that is less than about 500 $\mu$m in center particle size because of ease of handling in a magnetic separation step as the next step and that is more than 30 $\mu$m so as not to be affected by aggregation between particles.

In the pulverization step, a $nCaO \cdot P_2O_5$ phase, which is a non-magnetic material in the manganese oxide-containing material, is unevenly distributed in such a manner as to be enclosed in a ferromagnetic spinel phase typified by $MnFe_2O_4$ and a calcium ferrite phase, which is also a ferromagnetic material. The calcium ferrite phase is a phase typified by $CaFe_2O_4$. In addition, at least one of the spinel phase and the calcium ferrite phase, which are the ferromagnetic materials contained in the pulverized manganese oxide-containing material, is also referred to as ferromagnetic compound. In other words, the pulverized manganese oxide-containing material has a form, a major part of which is occupied by the ferromagnetic compound + the non-magnetic $nCaO \cdot P_2O_5$ phase and the weakly magnetic manganese silicate phase.

Herein, the present inventors have found through EPMA observation that, in a process of the pulverization, the $nCaO \cdot P_2O_5$ phase, which is a high P-containing phase, is combined with the ferromagnetic compound to form a composite, thereby forming high P-containing particles that are easily magnetized as particles. The composite is particles that contain two or more phases separated as phases. In other words, in the pulverization step, the $nCaO \cdot P_2O_5$ phase is enclosed in the ferromagnetic compound to form the high P-containing particles having magnetism as particles. Furthermore, the present inventors have revealed by experiments that the formation of the high P-containing particles having magnetism as particles is promoted when manganese silicate is contained in the ore.

Next, the magnetic separation step of magnetically separating the pulverized manganese oxide-containing material is performed to separate the pulverized manganese oxide-containing material into a magnetic substance and a non-magnetic substance (S102). In the magnetic separation step, a magnetic force to be applied to the pulverized manganese oxide-containing material is set to a magnetic force that does not cause the weakly magnetic manganese silicate to be magnetized. By setting the magnetic force as above, a magnetic substance can be obtained that primarily contains the ferromagnetic compound and the $nCaO \cdot P_2O_5$ phase evenly distributed in such a manner as to be enclosed in the ferromagnetic compound and a non-magnetic substance that primarily contains the manganese silicate phase.

Additionally, in the magnetic separation step, if the applied magnetic field is constant, the weakly magnetic manganese silicate phase is also involved in magnetization of the ferromagnetic compound. Thus, in the magnetic separation step, it is preferable to use a magnetic force sorting device in which the magnetic field fluctuates over time, and more preferable to use a magnetic force sorting device of multipole magnetic field fluctuation type (e.g., a magnetic force sorting device described in JP 2017-131869 A).

After step S102, the non-magnetic substance of the separated substances separated in the magnetic separation step is recovered as a manganese raw material (S104). The non-magnetic substance recovered in step S104 primarily contains the manganese silicate phase, and in which the $nCaO \cdot P_2O_5$ phase unevenly distributed in such a manner as to be enclosed in the ferromagnetic compound has been removed from the pulverized manganese oxide-containing material. In other words, the concentration of P can be reduced, and the concentration of Mn can be increased with respect to the manganese oxide-containing material before recovery. As a result, a manganese raw material can be manufactured that has lower P concentration and higher Mn concentration than in the manganese oxide-containing material before recovery.

On the other hand, after step S102, the magnetic substance of the separated substances separated in the magnetic separation step is recovered as an impurity (S106). The magnetic substance recovered in step S106 primarily contains the ferromagnetic compound and the $nCaO \cdot P_2O_5$ phase evenly distributed in such a manner as to be enclosed in the ferromagnetic compound. In the magnetic substance, the concentration of P is increased, and the concentration of Mn is reduced with respect to the manganese oxide-containing material before recovery.

In the method for manufacturing a manganese raw material according to the first embodiment, magnetic separation of the pulverized manganese oxide-containing material is performed. In this case, as illustrated in FIG 2, the $nCaO \cdot P_2O_5$ compound containing the impurity P in the pulverization step is enclosed in at least one phase of the spinel phase and the calcium ferrite phase, which are ferromagnetic compounds, thereby forming particles that have magnetism as particles but contain a high level of P (FIGS. 2A and 2B). In the magnetic separation step, by separating the high P-containing particles and the manganese silicate phase, a high-purity manganese raw material can be obtained that is a manganese raw material having low concentration of impurity P and high concentration of Mn (FIGS. 2C and 2D).

The manganese raw material recovered as the high-purity manganese raw material is then used for manufacturing manganese-containing molten steel. For example, adding the recovered manganese raw material to hot metal before decarburization in a converter-type refining furnace or the like enables manufacturing of hot metal having high manganese concentration. Additionally, when refining in a converter-type refining furnace or the like, when tapping from the converter-type refining furnace or the like, or when manufacturing in a secondary refining facility such as vacuum degassing equipment or ladle refining equipment, adding the recovered manganese raw material to molten iron enables manufacturing of molten iron having high manganese concentration. The recovered manganese raw material has lower P concentration than the manganese oxide-containing material before pulverization, and thus can be used as an alternative to at least some of other manganese raw materials having low P concentration but expensive, so that manufacturing cost can be significantly reduced.

This effect is particularly remarkable in manufacturing of high manganese molten steel having high manganese concentration as in high-tensile strength steel materials. In addition, by applying not only to high manganese steel but also to any type of Mn-containing steel, manufacturing cost can be reduced although the effect varies. Particularly, when refining in a secondary refining facility, the effect obtained by using the recovered manganese raw material is significant, because it is difficult to perform dephosphorization in subsequent steps including the refining step.

<Second Embodiment>

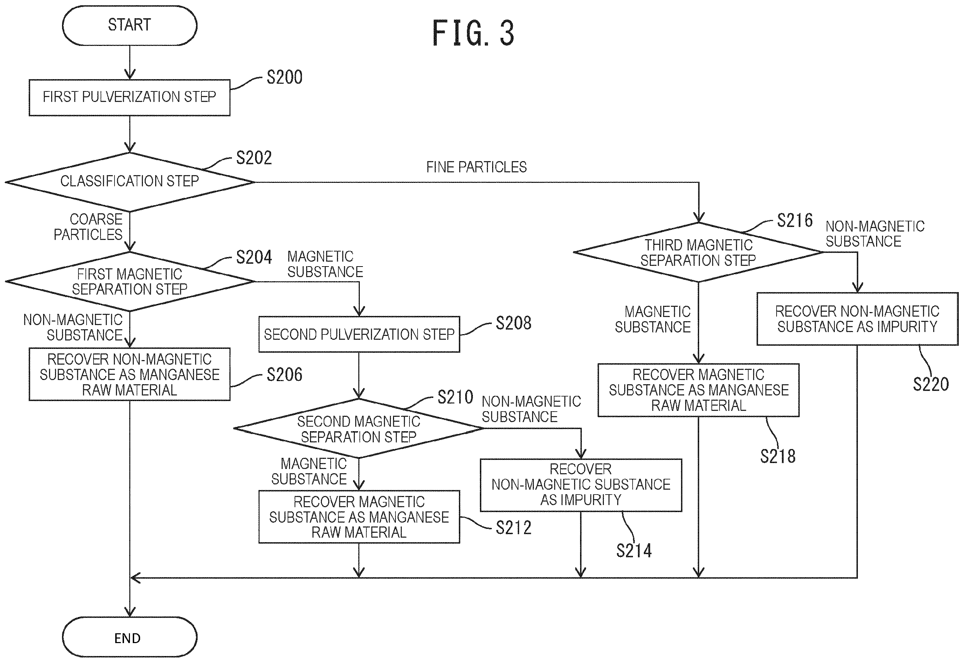

Next, a method for manufacturing a manganese raw material according to a second embodiment of the present invention will be described with reference to FIG 3. A manganese oxide-containing material to be used is the same as that in the first embodiment.

First, as illustrated in FIG 3, a first pulverization step of pulverizing the manganese oxide-containing material is performed (S200). In the first pulverization step, pulverization of the manganese oxide-containing material is performed in the same manner as the pulverization step of the first embodiment.

Next, a classification step is performed to classify the first pulverized manganese oxide-containing material (the same as "the pulverized manganese oxide-containing material" in the first embodiment) pulverized in the first pulverization step into coarse particles and fine particles (S202). In the classification step, it is preferable to set a separation diameter of 150 $\mu$m or less from results of particle size observation of the manganese silicate at the time of pulverization. Those having a particle size larger than the separation diameter are classified into coarse particles, and those having a particle size equal to or less than the boundary value are classified into fine particles. Additionally, in general, particle sizes less than 30 $\mu$m cause aggregation between the particles, whereby handling, such as recovery and transportation, becomes difficult. Accordingly, the separation diameter is set to preferably 30 $\mu$m or more. The classifying method is not particularly limited as long as it is a method used in an ordinary manufacturing step, such as a cyclone or a sieve. For example, in a classifying method using a sieve, a mesh size of from 30 $\mu$m to 150 $\mu$m may be set. Additionally, even in a classifying method such as a cyclone, the separation diameter can be determined by changing classification conditions typified by flow rate conditions through trial and error. It is preferable to use a sieve that can easily change the classification size according to fluctuations in the manganese oxide-containing material as the raw material. In the classification step, the non-magnetic $nCaO \cdot P_2O_5$ phase having a small particle size and being present independently is separated as the fine particles from the pulverized first pulverized manganese oxide-containing material. In addition, the fine particles classified in the classification step also include the ferromagnetic spinel phase, the ferromagnetic calcium ferrite phase, and the weakly magnetic manganese silicate phase that have a small particle size and are present independently.

After step S202, a first magnetic separation step of magnetically separating the first pulverized manganese oxide-containing material separated as the coarse particles in the classification step of step S202 is performed (S204). In the first magnetic separation step, magnetic separation of the first pulverized manganese oxide-containing material is performed in the same manner as the magnetic separation step of the first embodiment. Additionally, in the first magnetic separation step, a magnetic force to be applied to the first pulverized manganese oxide-containing material is set to a magnetic force (e.g., 2000 G or less) that does not cause the weakly magnetic manganese silicate to be magnetized. In the first magnetic separation step, mainly the ferromagnetic compound and the $nCaO \cdot P_2O_5$ phase unevenly distributed in such a manner as to be enclosed in the ferromagnetic compound are separated as a magnetic substance, and mainly the weakly magnetic manganese silicate is separated as a non-magnetic substance.

After step S204, the manganese silicate having a large particle size separated as the non-magnetic substance is recovered as a manganese raw material (S206).

Additionally, after step S204, a second pulverization step is performed to further pulverize the first pulverized manganese oxide-containing material primarily containing the ferromagnetic compound large in particle size and the $nCaO \cdot P_2O_5$ phase unevenly distributed in such a manner as to be enclosed in the ferromagnetic compound, both of which have been separated as the magnetic substance (S208). In the second pulverization step, the first pulverized manganese oxide-containing material is pulverized to obtain a second pulverized manganese oxide-containing material having a smaller particle size. In this case, preferably, the first pulverized manganese oxide-containing material is pulverized until a center particle size of 30 μm or less is obtained. In addition, the method for pulverization is not particularly limited to the pulverization method by applying pressure. In the second pulverization step, by further pulverizing the first pulverized manganese oxide-containing material, the $nCaO \cdot P_2O_5$ phase enclosed in the ferromagnetic compound is divided into the spinel phase and the calcium ferrite phase, which are ferromagnetic compounds, and the non-magnetic $nCaO \cdot P_2O_5$ phase.

After step S208, a second magnetic separation step of magnetically separating the pulverized second pulverized manganese oxide-containing material is performed (S210). In the second magnetic separation step, magnetic separation of the second pulverized manganese oxide-containing material is performed by a method capable of suppressing aggregation, such as, for example, magnetic separation in a liquid. Note that, in the second magnetic separation step, the magnetic force to be applied to the second pulverized manganese oxide-containing material may be the same as that in the magnetic separation step of the first embodiment, but is preferably set to a magnetic force (e.g., 5000 G or more) that causes the weakly magnetic manganese silicate phase to be magnetized. In the second magnetic separation step, the spinel phase and the calcium ferrite phase, which are ferromagnetic compounds, and the weakly magnetic manganese silicate phase, which are present independently, are separated as magnetic substances, and the $nCaO \cdot P_2O_5$ phase present independently is separated as a non-magnetic substance.

After step S210, the spinel phase and the manganese silicate phase separated as the magnetic substance are recovered as a manganese raw material (S212). The manganese raw material also contains the calcium ferrite phase. However, a content of P in the calcium ferrite phase is small, and when using the manganese raw material in refining of iron to steel, oxides of calcium and iron can be used as steelmaking raw materials. Therefore, use of the manganese raw material in refining of iron to steel is not a problem.

Additionally, after step S210, the $nCaO \cdot P_2O_5$ phase separated as the non-magnetic substance is recovered as an impurity (S214).

After step S202, a third magnetic separation step of magnetically separating the first pulverized manganese oxide-containing material separated as the fine particles in the classification step of step S202 is performed (S216). In the third magnetic separation step, magnetic separation of the first pulverized manganese oxide-containing material is performed by a method capable of suppressing aggregation, such as, for example, a magnetic separation in a liquid. Note that, in the third magnetic separation step, the magnetic force to be applied to the first pulverized manganese oxide-containing material may be any magnetic force that allows the ferromagnetic spinel phase to be magnetized, and for example, may be a magnetic force different from that of the magnetic separation step of the first embodiment. The third magnetic separation step separates the spinel phase and the calcium ferrite phase, which are ferromagnetic compounds, and the weakly magnetic manganese silicate, which are small in particle size and present independently, as magnetic substances, and separates the $nCaO \cdot P_2O_5$ phase small in particle size and present independently as a non-magnetic substance.

After step S216, the spinel phase and the manganese silicate phase separated as the magnetic substances are recovered as a high-purity manganese raw material (S218). The manganese raw material also contains the calcium ferrite phase. However, the content of P in the calcium ferrite phase is small, and when using the manganese raw material in refining of iron to steel, oxides of calcium and iron can be used as a steelmaking raw material. Therefore, it is not a problem to use the manganese raw material in refining of iron to steel.

Additionally, after step S216, the $nCaO \cdot P_2O_5$ phase separated as the non-magnetic substance is recovered as an impurity (S220).

As a result, in the second embodiment, the manganese raw materials recovered in steps S206, S212, and S218 are manufactured as manganese raw materials having lower P concentration and higher Mn concentration than in the manganese oxide-containing material before recovery.

In addition to the manufacturing method according to the first embodiment, the second embodiment additionally performs the classification step of step S202, the second pulverization step of step S208, the second magnetic separation step of step S210, and the third magnetic separation step of step S216. By doing this, Mn contained in the spinel phase that was not able to be recovered in the first embodiment can also be recovered, thus increasing recovery rate of Mn from the manganese oxide-containing material.

Note that, in the second embodiment, the manganese raw materials recovered as the high-purity manganese raw materials are then used for manufacturing manganese-containing molten steel, as in the first embodiment. In this case, the high-purity manganese raw materials recovered in steps S206, S210, and S218 may be used together as one kind of manganese raw material or may be separately used as individually recovered one.

<Modifications>

While the present invention has been described with reference to the specific embodiments, it is to be understood that the embodiments of the present invention are disclosed in the claims.

For example, the second embodiment is configured to add the classification step, the second magnetic separation step, the second pulverization step, and the third magnetic separation step to the manufacturing method according to the first embodiment. However, the present invention is not limited thereto. For example, a step described in any of the following (A) to (D) may be added to the manufacturing method according to the first embodiment. Note that when, in the structures of the following (A) to (D), the step of recovering a manganese raw material (a high-purity manganese raw material) is included after each step, as described in the second embodiment, the step shall also be included.

(A) Classification step
(B) Classification step + second magnetic separation step
(C) Second pulverization step + third magnetic separation step
(D) Classification step + second pulverization step + third magnetic separation step

<Effects of Embodiments>

(1) The method for manufacturing a manganese raw material according to one aspect of the present invention includes a first pulverization step (the pulverization step of S100 or S200) of compressively pulverizing a manganese oxide-containing material containing at least manganese, calcium, silicon, iron, and phosphorus, which is used as a raw material, to form a composite in which a compound phase of $nCaO \cdot P_2O_5$ is combined with at least one phase of a spinel phase and a calcium ferrite phase, which are ferromagnetic materials, and produce a first pulverized manganese oxide-containing material containing the composite; a first magnetic separation step (the magnetic separation step of S102 or S204) of separating the first pulverized manganese oxide-containing material produced in the first pulverization step into a magnetic substance and a non-magnetic substance under a magnetic force; and a step (S104, S206) of recovering the non-magnetic substance separated in the first magnetic separation step as a manganese raw material.

According to the structure of the above (1), the pulverization step performs pulverization while applying pressure, thereby forming high P-containing particles in which the $nCaO \cdot P_2O_5$ compound is enclosed in a ferromagnetic compound phase, which is at least one phase of the spinel phase and the calcium ferrite phase. Then, the high P-containing particles are magnetically separated in the magnetic separation step to recover a non-magnetic substance having low P concentration and low Mn concentration as a manganese raw material. The manganese raw material has a lower P concentration than the manganese oxide-containing material before pulverization. Thus, using the manganese raw material to manufacture manganese-containing molten steel can reduce an amount of usage of an expensive manganese raw material such as ferromanganese or metal manganese, so that manufacturing cost can be reduced.

Additionally, according to the structure of the above (1), use of the manganese oxide-containing material requires no dephosphorization of molten iron to be manufactured. Thus, manganese steel can be smelted without using any deleterious substance typified by BaO.

(2) In the structure of the above (1), the first pulverization step pulverizes until the first pulverized manganese oxide-containing material has a particle size 500 $\mu$m or less.

According to the structure of the above (2), separation between the $nCaO \cdot P_2O_5$ phase and the manganese silicate phase in the manganese oxide-containing material can be promoted. Since a rate of separation between particles containing P and particles containing the manganese silicate, as particles, is increased, magnetic separation in the first magnetic separation step is facilitated.

(3) In the structure of the above (1) or (2), the manganese oxide-containing material that contains a manganese silicate phase is used.

According to the structure of the above (3), formation of high P-containing particles having magnetism as particles is promoted.

(4) In the structure of the above (3), the first magnetic separation step separates the manganese silicate phase as the non-magnetic substance by separating under the magnetic force that dose not cause the manganese silicate phase to be magnetized.

According to the structure of the above (4), separation between the manganese silicate phase and the $nCaO \cdot P_2O_5$ phase enclosed in the ferromagnetic compound phase can be further ensured. This can improve impurity separation effect.

(5) In the structure of any one of the above (1) to (4), in the first magnetic separation step, a magnetic field to be applied is a fluctuating magnetic field that changes over time.

According to the structure of the above (5), at the time of the magnetic separation, the weakly magnetic manganese silicate phase caught in the spinel phase of the ferromagnetic compound can be separated from the ferromagnetic compound phase.

(6) The structure of any one of the above (1) to (5) further includes, after the first pulverization step, a classification step (S202) of classifying the first pulverized manganese oxide-containing material into coarse particles and fine particles by a separation diameter set within a range of from 30 $\mu$m to 150 $\mu$m, in which the first magnetic separation step separates the coarse particles classified in the classification step.

According to the structure of the above (6), the $nCaO \cdot P_2O_5$ phase included in the pulverization step can be separated as the fine particles. Thus, the P concentration of the manganese raw material to be recovered as the non-magnetic substance in the magnetic separation step can be further reduced.

(7) The structure of the above (6) further includes a third magnetic separation step (S216) of separating the fine particles classified in the classification step into a magnetic substance and a non-magnetic substance under a magnetic force and a step (S218) of recovering the magnetic substance separated in the third magnetic separation step as a manganese raw material.

According to the structure of the above (7), the spinel phase contained in the fine particles and containing manganese can be recovered as the manganese raw material. Thus, a recovery rate of the manganese raw material from the manganese oxide-containing material can be improved.

(8) The structure of any one of the above (1) to (7) further includes a second pulverization step (S208) of pulverizing the magnetic substance separated in the first magnetic separation step to produce a second pulverized manganese oxide-containing material, a second magnetic separation step (S210) of separating the magnetic substance produced in the second pulverization step into a magnetic substance and a non-magnetic substance, and a step (S212) of recovering the magnetic substance separated in the second magnetic separation step as a manganese raw material.

According to the structure of the above (8), the $nCaO \cdot P_2O_5$ phase enclosed in the spinel phase, which phases are the magnetic substances separated in the first magnetic separation step, is further pulverized into small particles, whereby the ferromagnetic compound phase and the $nCaO \cdot P_2O_5$ phase can be divided. Furthermore, in the second magnetic separation step, by magnetically separating and recovering the ferromagnetic compound phase containing manganese, the recovery rate of the manganese raw material from the manganese oxide-containing material can be improved.

(9) A method for manufacturing manganese-containing molten steel according to one aspect of the present invention is a method for manufacturing manganese-containing molten steel, which includes adding the manganese raw material recovered by the method for manufacturing a manganese raw material according to any one of the above (1) to (8) to hot metal or molten steel to adjust a manganese concentration of the hot metal or the molten steel.

According to the structure of the above (9), the same effects as those of the above (1) to (8) can be obtained.

Examples

Example 1

Next, Example 1 performed by the present inventors will be described. In Example 1, first, as one of manganese oxide-containing materials, two kinds of manganese ores different in composition ingredients were subjected to analysis of component composition and investigation of mineral phases through XRD. Next, 1 kg of the two kinds manganese ores was pulverized in a mortar and magnetically separated, followed by respective investigations on component compositions of magnetic and non-magnetic substances.

Table 1 illustrates analysis results of component compositions of the manganese ores different in component composition designated as condition 1 and condition 2. Additionally, Table 2 illustrates analysis results of mineral phases through XRD in the manganese ores of conditions 1 and 2. As illustrated in Table 2, it was confirmed that the manganese ore of condition 1 contained a manganese silicate phase, whereas the manganese ore of condition 2 contained no manganese silicate.

[Table 1]

| Manganese ore | Component composition (mass%) | | | | | | |
|---|---|---|---|---|---|---|---|
| | T.Mn | T.Fe | CaO | $SiO_2$ | MgO | $Al_2O_3$ | P |
| Condition 1 | 35 | 8 | 13.4 | 6.8 | 2.2 | 0.5 | 0.04 |
| Condition 2 | 50 | 0.8 | 0.4 | 4.1 | 0.2 | 8.1 | 0.08 |

**EP 3 760 750 B1**

[Table 2]

| Manganese ore | Mineral phases |
|---|---|
| Condition 1 | $Mn_7SiO_{12}$, $CaMn_6SiO_{12}$, $Mn_3O_4$, $MnFe_2O_4$, $Fe_3O_4$, $(Ca,Mn)CO_3$ |
| Condition 2 | $MnO_2$, $Mn(OH)_4$, $Mn_3O_4$, $MnFe_2O_4$, $Mn_3O_4$, $SiO_2$ |

Table 3 illustrates analysis results of component compositions obtained by magnetically separating the manganese ore of condition 1 pulverized in the mortar and analyzing the separated magnetic and non-magnetic substances. Additionally, Table 4 illustrates analysis results of component compositions obtained by magnetically separating the manganese ore of condition 2 pulverized in the mortar and analyzing the separated magnetic and non-magnetic substances. Note that, in tests illustrated in Table 3 and Table 4, the manganese ores of condition 1 and condition 2, respectively, were subjected to magnetic separation under four conditions different in magnetic field strength (1100 G, 1500 G, 2000 G, and 2500 G).

[Table 3]

Magnetic field strength conditions

| Component composition (mass%) | No magnetic separation | 1100G | | 1500G | | 2000G | | 2500G | |
|---|---|---|---|---|---|---|---|---|---|
| | | Magnetic substance | Non-magnetic substance | Magnetic substance | Non-magnetic substance | Magnetic substance | Non-magnetic substance | Magnetic substance | Non-magnetic substance |
| T.Mn | 35 | 32 | 36 | 31 | 37 | 34 | 36 | 33 | 39 |
| T.Fe | 8 | 16 | 5 | 16 | 4 | 12 | 4 | 10 | 4 |
| CaO | 13.4 | 13.2 | 13.5 | 12.7 | 13.8 | 12 | 14.5 | 11.8 | 16.4 |
| $SiO_2$ | 6.8 | 4.0 | 8.0 | 5.3 | 7.6 | 4.4 | 8.8 | 4.6 | 10.9 |
| MgO | 2.2 | 2.7 | 2.0 | 2.9 | 1.8 | 3.1 | 1.5 | 1.8 | 2.9 |
| $Al_2O_3$ | 0.5 | 0.4 | 0.5 | 0.5 | 0.5 | 0.6 | 0.4 | 0.6 | 0.3 |
| P | 0.040 | 0.070 | 0.027 | 0.074 | 0.022 | 0.056 | 0.027 | 0.045 | 0.031 |

[Table 4]

| Component composition (mass%) | Magnetic field strength conditions | | | | | | | | |
|---|---|---|---|---|---|---|---|---|---|
| | No magnetic separation | 1100G | | 1500G | | 2000G | | 2500G | |
| | | Magnetic substance | Non-magnetic substance | Magnetic substance | Non-magnetic substance | Magnetic substance | Non-magnetic substance | Magnetic substance | Non-magnetic substance |
| T.Mn | 50 | Magnetic substance was not collectable | | Magnetic substance was not collectable | | 49 | 50 | 53 | 50 |
| T.Fe | 0.8 | | | | | 2.4 | 0.8 | 1.3 | 0.8 |
| CaO | 0.4 | | | | | 2.4 | 0.8 | 1.3 | 0.8 |
| $SiO_2$ | 4.1 | | | | | 1.0 | 0.4 | 0.5 | 0.4 |
| MgO | 0.2 | | | | | 0.1 | 0.2 | 0.4 | 0.2 |
| $Al_2O_3$ | 8.1 | | | | | 12.0 | 8.0 | 10.0 | 8.0 |
| P | 0.080 | | | | | 0.090 | 0.079 | 0.092 | 0.079 |

As illustrated in Table 3, in the case of the manganese ore of condition 1, it was confirmed that, in any magnetic field strength, there were obtained pulverized manganese ores having a component composition different from that of the manganese ore of condition 1 before the processing, as magnetic and non-magnetic substances. Particularly, the non-magnetic substances were confirmed to have lower concentrations of P and Fe and a higher concentration of Mn with respect to the manganese ore of condition 1 before the processing. On the other hand, the magnetic substances were confirmed to be lower in concentration of Mn and higher in concentration of impurity P with respect to the manganese ore of condition 1 before the processing.

The magnetic substances were analyzed by EPMA, which confirmed that, regarding high P-containing particles having high P concentration, a perimeter of the phase having high P concentration was surrounded by a spinel phase typified by $MnFe_2O_4$. Thus, the results of Table 3 are considered to be those indicating that, by enclosing the $nCaO \cdot P_2O_5$ compound in the spinel phase having magnetism, the particles having high P concentration were magnetized and thereby were able to be removed. Particularly, in the magnetic substances, it was found that the high P-containing particles having a size of about from 200 $\mu$m to 500 $\mu$m primarily contained phases composed of CaO, $SiO_2$, and $P_2O_5$, and were surrounded by at least one phase of a spinel phase primarily containing oxides of Mn, Fe, and Mg and a calcium ferrite phase typified by $CaFe_2O_4$.

Additionally, in the case of the manganese ore of condition 1, separation effect at a magnetic field strength of 2000 G or less was confirmed to be greater than that at a magnetic field strength of 2500 G. This is considered to be a result indicating that manganese silicate was recovered as a non-magnetic substance, and the manganese silicate phase and the high P phase were able to be separated.

Even in the case of the manganese ore of condition 2, it was confirmed that the concentration of P of the non-magnetic substance was reduced as compared with that in the manganese ore not subjected to magnetic separation, thus indicating the impurity effect. However, the impurity separation effect (a difference in the P concentration of the non-magnetic substance with respect to the magnetic substance) in the manganese ore of condition 2 was smaller than that in the manganese ore of condition 1. This is considered to be because the condition 2 does not contain manganese silicate as a mineral phase.

Additionally, in Example 1, the manganese ore of condition 1 was subjected to steps S100 and S102, in which recovery of a manganese raw material was tested in a fluctuating magnetic field in which magnetic field strength was changed over time in the magnetic separation step of step S102. This test used a magnetic force sorting device of multipole magnetic field fluctuation type to perform magnetic separation by changing the magnetic field strength to 0 G and 1500 G along the passage of time. In addition, the test was performed under four conditions (500 rpm, 1000 rpm, 1500 rpm, and 2000 rpm) different in the rotational speed of a magnetic pole roll, and analysis was made on component compositions of the magnetic substance and the non-magnetic substance obtained under the respective rotational speeds. Note that conditions other than those above were the same as those illustrated in Table 3.

Table 5 illustrates analysis results of the component compositions of the magnetic substance and the non-magnetic substance under the conditions different in the rotational speed of the magnetic pole roll, which were results of the test in the fluctuating magnetic field. As illustrated in Table 5, the tests at rotational speeds of 500 rpm or more showed no significant difference in the impurity separation effect.

[Table 5]

| Component composition (mass%) | Rotational speed of magnetic pole roll | | | | | | | | |
|---|---|---|---|---|---|---|---|---|---|
| | No magnetic separation | 500rpm | | 1000rpm | | 1500rpm | | 2000rpm | |
| | | Magnetic substance | Non-magnetic substance | Magnetic substance | Non-magnetic substance | Magnetic substance | Non-magnetic substance | Magnetic substance | Non-magnetic substance |
| T.Mn | 35 | 31 | 37 | 31 | 37 | 31 | 37 | 32 | 36 |
| T.Fe | 8 | 17 | 5 | 18 | 3 | 17 | 4 | 18 | 5 |
| CaO | 13.4 | 11.4 | 12.3 | 11.8 | 12.1 | 11.2 | 12.5 | 13.4 | 11.3 |
| $SiO_2$ | 6.8 | 4.7 | 5.2 | 3.8 | 5.7 | 3.7 | 5.8 | 3.8 | 5.6 |
| MgO | 2.2 | 1.8 | 2.4 | 2.8 | 1.8 | 2.4 | 2.1 | 2.6 | 2.0 |
| $Al_2O_3$ | 0.5 | 0.8 | 0.3 | 0.8 | 0.3 | 0.6 | 0.4 | 0.9 | 0.3 |
| P | 0.040 | 0.074 | 0.021 | 0.072 | 0.020 | 0.068 | 0.023 | 0.076 | 0.022 |

Furthermore, Example 1 performed the processing of steps S100 and S102 by testing under a plurality of conditions where the pulverization method was changed in the pulverization step of step S100. In this test, as in the first embodiment, the manganese ore of condition 1 was pulverized under different conditions using a ball mill, a rod mill, a roller mill, and a cutter mill, respectively (pulverization step), the pulverized ore pulverized was magnetically separated (magnetic separation step), and analysis was made on component compositions of the magnetic and non-magnetic substances. As a result of the tests, all the tests confirmed a tendency in which the P concentration of the non-magnetic substance was reduced with respect to that of the magnetic particles. Furthermore, the P concentration of the non-magnetic substance was further reduced under the conditions using the ball mill, the rod mill, and the roller mill as compared with the conditions using the cutter mill and a jet mill, which confirmed improved impurity separation effect. This is considered to be because the method of pulverizing the manganese ore by applying pressure, like a ball mill, a rod mill, or a roller mill, further promoted formation of high P-containing particles having magnetism as particles.

Furthermore, as in the second embodiment, Example 1 performed the processing of steps S200, S202, and S204, and made component analysis of the magnetic and non-magnetic substances magnetically separated in the first magnetic separation step of step S204 to test impurity separation effect by addition of a classification step. In this test, the manganese ore of condition 1 was used, and classification was made using a 325-mesh sieve in the classification step of step S202, in which particle sizes of coarse particles classified were set to 45 $\mu$m or more. Then, in the magnetic separation step of step S202, magnetic separation was performed in a fluctuating magnetic field under four conditions (1100 G, 1500 G, 2000 G, and 2500 G) respectively different in magnetic field strength. Table 6 illustrates analysis results of component compositions of the magnetic and non-magnetic substances at each magnetic field strength, which are results of the test added with the classification step. Note that the first magnetic separation step used a magnetic force sorting device of multipole magnetic field fluctuation type, in which the rotational speed of the magnetic pole roll was set to 2000 rpm. As illustrated in Table 6, in the processing added with the classification step, the P concentration of the non-magnetic substance was confirmed to be lower than the results of Table 3, which indicated that impurity separation effect is improved by classification.

[Table 6]

| Component composition (mass%) | Magnetic field strength conditions | | | | | | | | |
|---|---|---|---|---|---|---|---|---|---|
| | No magnetic separation | 1100G | | 1500G | | 2000G | | 2500G | |
| | | Magnetic substance | Non-magnetic substance | Magnetic substance | Non-magnetic substance | Magnetic substance | Non-magnetic substance | Magnetic substance | Non-magnetic substance |
| T.Mn | 35 | 31 | 36 | 31 | 36 | 31 | 37 | 34 | 36 |
| T.Fe | 8 | 18 | 7 | 16 | 7 | 16 | 6 | 12 | 6 |
| CaO | 13.4 | 13.2 | 11.7 | 14.8 | 11.3 | 14 | 11.1 | 12.3 | 11.7 |
| $SiO_2$ | 6.8 | 2.7 | 5.5 | 3.2 | 5.5 | 3.2 | 5.8 | 3.5 | 6.5 |
| MgO | 2.2 | 1.8 | 3.3 | 2.2 | 3.2 | 2.3 | 3.3 | 2.4 | 3.6 |
| $Al_2O_3$ | 0.5 | 1 | 0.4 | 0.8 | 0.4 | 1 | 0.3 | 0.6 | 0.4 |
| P | 0.040 | 0.070 | 0.021 | 0.075 | 0.019 | 0.060 | 0.017 | 0.036 | 0.024 |

Furthermore, in the test illustrated in Table 6, the second pulverization step of step S208 and the second magnetic separation step of step S210 were performed on the magnetic substance magnetically separated in the first magnetic separation step of step S204, and analysis was made on component compositions of the magnetically separated magnetic and non-magnetic substances. Additionally, in the test illustrated in Table 6, fine particles classified in the classification step of step S202 were subjected to the third magnetic separation step of step S216, and analysis was made on component compositions of the magnetically separated magnetic and non-magnetic substances. Note that, in the second magnetic separation step and the third magnetic separation step, respectively, magnetic separation was performed under two conditions (5000 G and 10000 G) different in magnetic field strength. Table 7 and Table 8, respectively, illustrate the component compositions of the magnetic and non-magnetic substances after the second magnetic separation step and the component compositions of the magnetic and non-magnetic substances after the third magnetic separation step. As illustrated in Table 7 and Table 8, both the second magnetic separation step and the third magnetic separation step had a significantly reduced P concentration and an increased Mn concentration of the magnetic substance as compared with the non-magnetic substance, which confirmed that impurity separation effect was obtained.

[Table 7]

| Component composition (mass%) | Magnetic field strength conditions | | | |
|---|---|---|---|---|
| | 5000G | | 10000G | |
| | Magnetic substance | Non-magnetic substance | Magnetic substance | Non-magnetic substance |
| T.Mn | 39 | 23 | 37 | 25 |
| T.Fe | 10 | 5 | 10 | 6 |
| CaO | 9.8 | 18.6 | 10.9 | 17.8 |
| $SiO_2$ | 3.2 | 10.4 | 3.8 | 11.3 |
| MgO | 3.2 | 2.4 | 2.9 | 3.5 |
| $Al_2O_3$ | 0.3 | 1.1 | 0.3 | 1.6 |
| P | 0.021 | 0.057 | 0.023 | 0.067 |

[Table 8]

| Component composition (mass%) | Magnetic field strength conditions | | | |
|---|---|---|---|---|
| | 5000G | | 10000G | |
| | Magnetic substance | Non-magnetic substance | Magnetic substance | Non-magnetic substance |
| T.Mn | 38 | 26 | 37 | 24 |
| T.Fe | 10 | 5 | 10 | 4 |
| CaO | 10 | 18 | 10.4 | 21.1 |
| $SiO_2$ | 3.2 | 10.4 | 4.1 | 10.1 |
| MgO | 3.1 | 2.7 | 3.0 | 3.0 |
| $Al_2O_3$ | 0.4 | 0.8 | 0.4 | 1.1 |
| P | 0.022 | 0.114 | 0.026 | 0.152 |

Example 2

Next, Example 2 performed by the present inventors will be described. Example 2 used the manganese ore of conditions 1 in Example 1 to recover a manganese raw material in the same manner as the above embodiments or modifications, and analyzed the Mn concentration and P concentration of the recovered manganese raw material. Additionally, Example 2 investigated a recovery yield of the manganese raw material indicating an amount of manganese in the recovered manganese raw material with respect to an amount of manganese contained in the manganese ore before pulverization.

Table 9 illustrates conditions of Example 2. As illustrated in Table 9, Example 2 performed recovery of the manganese raw material under six different conditions of Examples 2-1 to 2-6. In addition, for comparison, three conditions of Comparative Examples 2-1 to 2-3 were set to recover a manganese raw material. Examples 2-1 and 2-2 are conditions in which the processing of steps S100, S102, and S104 was performed, and a manganese raw material was recovered at step S104. Example 2-3 is a condition in which the processing of steps S200, S202, S204, and S206 was performed, and a manganese raw material was recovered at step S206. Example 2-4 is a condition in which the processing of steps S200, S202, S204, S206, S208, S210, and S212 was performed, and a manganese raw material was recovered finally in steps S206 and S212. Examples 2-5 and 2-6 are conditions in which the processing of steps S200, S202, S204, S206, S208, S210, S212, S216, and S218 was performed, and a manganese raw material was recovered finally in steps S206, S212, and S218.

Furthermore, Example 2 pulverized the manganese ore using a roller mill in Examples 2-1 to 2-5 and a ball mill in Example 2-6, respectively, in the pulverization step of step S100 or the first pulverization step of step S200.

The magnetic separation step of step S102 or the first magnetic separation step of step S204 used a magnetic force sorting device of multipole magnetic field fluctuation type. Additionally, in Example 2-1, the magnetic field strength was changed to 0 G and 3000 G, and in Examples 2-2 to 2-6, the magnetic field strength was changed to 0 G and 1900 G. In addition, Examples 2-4 to 2-6 changed the magnetic field strength to 0 G and 5000 G in the second magnetic separation step of step S206 and step S216.

In the classification step of step S202, classification using a sieve was performed as a classification method. Furthermore, classification mesh in Example 2-3 was 325 mesh, classification mesh in Example 2-4 was 250 mesh, and classification mesh in Examples 2-5 and 2-6 was 200 mesh.

On the other hand, the condition of Comparative Example 2-1 is to recover the manganese ore as it is as a manganese raw material. In addition, in Comparative Example 2-2 and 2-3, the processing was performed in the same manner as steps S100, S102, and S104. Additionally, in Comparative Example 2-2, pulverization was performed using a cutter mill in the pulverization step of step S100, and magnetic field strength was changed to 0 G and 3000 G using a magnetic force sorting device of multipole magnetic field fluctuation type in the magnetic separation step of step S102. Furthermore, in Comparative Example 2-3, pulverization was performed using a jet mill in the pulverization step of step S100, and magnetic field strength was changed to 0 G and 1900 G using a magnetic force sorting device of multipole magnetic field fluctuation type in the magnetic separation step of step S102.

[Table 9]

|  | Mineral phase | Pulverization step, First pulverization step | Magnetic separation step, First magnetic separation step | Classification step | Second magnetic separation step | Third magnetic separation step |
|---|---|---|---|---|---|---|
|  |  | Pulverization method | Magnetic field strength | Mesh |  |  |
| Ex. 2-1 | $Mn_7SiO_{12}$, $CaMn_6SiO_{12}$, $Mn_3O_4$, $MnFe_2O_4$, $Fe_3O_4$, $(Ca,Mn)CO_3$ | Roller mill | 8000G | None | Not done | Not done |
| Ex. 2-2 |  | | 1900G | None |  |  |
| Ex. 2-3 |  | |  | 325 mesh |  |  |
| Ex. 2-4 |  | |  | 250 mesh |  | Done |
| Ex. 2-5 |  | |  | 200 mesh | Done |  |
| Ex. 2-6 |  | Ball mill |  |  |  |  |
| Co-Ex. 2-1 |  | None | None | None | Not done | Not done |
| Co-Ex. 2-2 |  | Cutter mill | 8000G |  |  |  |
| Co-Ex. 2-3 |  | Jet mill | 1900G |  |  |  |

Table 10 illustrates results of Example 2. Herein, recovery yield was calculated using a formula represented by equation (1) below. Additionally, a target P concentration of the manganese raw material to be recovered was set to 0.036% by mass or less, which was 90% of the manganese oxide-containing material before pulverization, and a target recovery yield was set to 60% to perform evaluation. As illustrated in Table 10, in the conditions of Examples 2-1 to 2-6, increased Mn concentration and reduced P concentration were confirmed as compared with Comparative Example 2-1 as the manganese ore and Comparative Examples 2-2 and 2-3. In addition, in Example 2-2 at the magnetic field strength of 1900 G, improved recovery yield was confirmed as compared with Example 2-1. This is considered to be because lowering the magnetic field strength enabled improvement in the recovery yield of the manganese silicate. In Example 2-3 that performed the sieving processing, increased Mn concentration and reduced P concentration in the obtained manganese raw material were confirmed as compared with Example 2-2. This is considered to be because a P-containing phase not forming a composite with the ferromagnetic compound was able to be removed before the magnetic separation. In Example 2-4 in which a pulverized manganese raw material obtained by pulverizing the magnetic substance obtained in the first magnetic separation step in the second pulverization step was subjected to the second magnetic separation step, and a manganese raw material obtained as a magnetic substance was added, improved yield of the obtained manganese raw material was confirmed as compared with Example 2-3. Furthermore, in Example 2-5 in which the third magnetic separation step was additionally performed on a manganese raw material obtained as fine particles in the classification step, further improved yield of the manganese raw material was confirmed as compared with Example 2-4. Furthermore, even in Example 2-6 that performed pulverization using a ball mill, the same results as those of Example 2-5 were obtained, which confirmed that the separation effect can be effectively obtained when using pulverization that performs pulverization by applying pressure.

$$\text{Recovery yield (\%)} = (\text{weight of manganese raw material}$$

$$\text{recovered at S206 + weight of manganese raw material recovered}$$

$$\text{at S212 + weight of manganese raw material recovered at S218)}$$

$$\div \text{ total weight of manganese oxide-containing material before}$$

$$\text{pulverization} \times 100 \dots (1)$$

[Table 10]

| | Component composition (mass%) | | Recovery yield (%) | Evaluation |
|---|---|---|---|---|
| | T.Mn | P | | |
| Ex. 2-1 | 39 | 0.027 | 35 | ○ |
| Ex. 2-2 | 37 | 0.025 | 82 | ◎ |
| Ex. 2-3 | 39 | 0.019 | 73 | ◎ |
| Ex. 2-4 | 38 | 0.021 | 77 | ◎ |
| Ex. 2-5 | 37 | 0.022 | 85 | ◎ |
| Ex. 2-6 | 39 | 0.024 | 87 | ◎ |
| Co-Ex. 2-1 | 35 | 0.040 | - | × |
| Co-Ex. 2-2 | 36 | 0.038 | 78 | × |
| Co-Ex. 2-3 | 36 | 0.038 | 73 | × |

Example 3

Next, Example 3 performed by the present inventors will be described. Example 3 used the manganese raw material recovered in Example 2-4 to manufacture manganese-containing molten steel. In Example 3, hot metal was charged in a 350-t converter-type refining furnace, and $O_2$ gas was injected into the hot metal in the furnace from a top-blowing lance while stirring by bottom blowing to perform decarburization blowing. At the time of the decarburization blowing, the manganese raw material recovered in Example 2-4 was added as an Mn source by top-adding. In addition, as Comparative Example 3, a manganese oxide-containing material that was the manganese raw material of Comparative Example 2-1 was preferentially used to manufacture manganese-containing molten steel. In Comparative Example 3, conditions other than the manganese raw material were the same as those of Example 3. Additionally, Comparative Example 3 used metal manganese having low P concentration when it was impossible to use a manganese oxide-containing material due to an upper limit concentration of P.

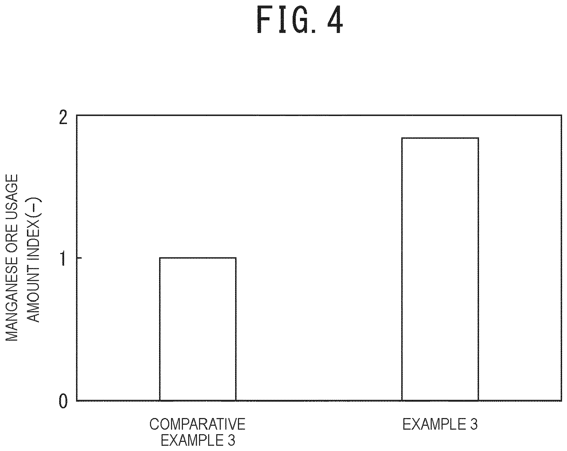

FIG 4 illustrates amounts of usage of manganese ores in Example 3 and Comparative Example 3 (the manganese raw material recovered from the manganese ore, in the case of Example 3). The example illustrated in FIG 4 illustrates amounts of the manganese ores used in manufacturing the kind of steel in which a ratio of a required Mn concentration to the upper limit concentration of P in manganese-containing steel is approximately 1000. Additionally, the vertical axis of FIG 4 represents indices where the amount of usage of the manganese ore of Comparative Example 3 is 1. As illustrated in FIG 4, the amount of usage of the manganese ore in Example 3 was confirmed to have remarkably increased as compared with Comparative Example 3. This confirmed that manufacturing cost (particularly, alloy cost) when manufacturing manganese-containing molten steel can be reduced.

**Claims**

1.    A method for manufacturing a manganese raw material comprising:

a first pulverization step (S200) of compressively pulverizing a manganese oxide-containing material containing at least manganese, calcium, silicon, iron, and phosphorus, which is used as a raw material, to form a composite in which a compound phase of $nCaO \cdot P_2O_5$ is combined with at least one phase of a spinel phase and a calcium ferrite phase, which are ferromagnetic materials, and produce a first pulverized manganese oxide-containing material containing the composite, whereas the spinel phase is $MnFe_2O_4$;

a first magnetic separation step (S204) of separating the first pulverized manganese oxide-containing material produced in the first pulverization step (S200) into a magnetic substance and a non-magnetic substance under a magnetic force; and

a step of recovering the non-magnetic substance (S206) separated in the first magnetic separation step (S204) as a manganese raw material.

2. The method for manufacturing a manganese raw material according to claim 1, wherein the first pulverization step(S200) pulverizes until the first pulverized manganese oxide-containing material has a particle size of 500 $\mu$m or less.

3. The method for manufacturing a manganese raw material according to claim 1 or 2, wherein the first pulverization step (S200) uses the manganese oxide-containing material that contains a manganese silicate phase as a mineral phase.

4. The method for manufacturing a manganese raw material according to claim 3, wherein the first magnetic separation step (S204) separates the manganese silicate phase as the non-magnetic substance by separating under the magnetic force that does not cause the manganese silicate phase to be magnetized.

5. The method for manufacturing a manganese raw material according to any one of claims 1 to 4, wherein in the first magnetic separation step (S204), a magnetic field to be applied is a fluctuating magnetic field that changes over time.

6. The method for manufacturing a manganese raw material according to any one of claims 1 to 5, further comprising, after the first pulverization step (S200), a classification step (S202) of classifying the first pulverized manganese oxide-containing material into coarse particles and fine particles by a separation diameter set within a range of from 30 $\mu$m to 150 $\mu$m, wherein the first magnetic separation step (S204) separates the coarse particles classified in the classification step (S202).

7. The method for manufacturing a manganese raw material according to claim 6, further comprising a third magnetic separation step (216) of separating the fine particles classified in the classification step (S202) into a magnetic substance and a non-magnetic substance under a magnetic force and a step of recovering the magnetic substance (S218) separated in the third magnetic separation step as a manganese raw material.

8. The method for manufacturing a manganese raw material according to any one of claims 1 to 7, further comprising a second pulverization step (S208) of pulverizing the magnetic substance separated in the first magnetic separation step (S204) to produce a second pulverized manganese oxide-containing material; a second magnetic separation step (S210) of separating the second pulverized manganese oxide-containing material produced in the second pulverization step (S208) into a magnetic substance and a non-magnetic substance under a magnetic force; and a step of recovering the magnetic substance (S212) separated in the second magnetic separation step (S210) as a manganese raw material.

9. A method for manufacturing manganese-containing molten steel comprising adding the manganese raw material recovered by the method for manufacturing a manganese raw material according to any one of claims 1 to 8 to hot metal or molten steel to adjust a manganese concentration of the hot metal or the molten steel.

**Patentansprüche**

1. Verfahren zum Herstellen eines Mangan-Rohmaterials, umfassend:

einen ersten Pulverisierungsschritt (S200), bei dem ein manganoxidhaltiges Material, das mindestens Mangan, Calcium, Silicium, Eisen und Phosphor enthält und als Rohmaterial verwendet wird, unter Druck pulverisiert wird, um einen Verbundwerkstoff zu bilden, bei welchem eine Verbindungsphase aus $nCaO \cdot P_2O_5$ mit mindestens einer Phase aus einer Spinellphase und einer Calciumferritphase, bei denen es sich um ferromagnetische Materialien handelt, kombiniert wird, und ein erstes pulverisiertes manganoxidhaltiges Material herzustellen, das den Verbundwerkstoff enthält, wobei die Spinellphase $MnFe_2O_4$ ist,

einen ersten magnetischen Trennungsschritt (S204) des Trennens des ersten pulverisierten manganoxidhaltigen Materials, das in dem ersten Pulverisierungsschritt (S200) hergestellt wurde, in eine magnetische Substanz und eine nicht magnetische Substanz unter einer magnetischen Kraft; und

einen Schritt der Rückgewinnung der nicht magnetischen Substanz (S206), die in dem ersten magnetischen Trennungsschritt (S204) getrennt wurde, als Mangan-Rohmaterial.

2. Verfahren zum Herstellen eines Mangan-Rohmaterials gemäß Anspruch 1, wobei der erste Pulverisierungsschritt (S200) so lange pulverisiert, bis das erste pulverisierte manganoxidhaltige Material eine Teilchengröße von 500 μm oder weniger aufweist.

3. Verfahren zum Herstellen eines Mangan-Rohmaterials gemäß Anspruch 1 oder 2, wobei der erste Pulverisierungsschritt (S200) das manganoxidhaltige Material verwendet, das eine Mangansilikatphase als mineralische Phase enthält.

4. Verfahren zum Herstellen eines Mangan-Rohmaterials gemäß Anspruch 3, wobei der erste magnetische Trennungsschritt (S204) die Mangansilikatphase als die nicht magnetische Substanz durch Trennen unter der magnetischen Kraft abtrennt, die nicht bewirkt, dass die Mangansilikatphase magnetisiert wird.

5. Verfahren zum Herstellen eines Mangan-Rohmaterials gemäß einem der Ansprüche 1 bis 4, wobei in dem ersten magnetischen Trennschritt (S204) ein anzulegendes Magnetfeld ein fluktuierendes Magnetfeld ist, das sich im Laufe der Zeit ändert.

6. Verfahren zum Herstellen eines Mangan-Rohmaterials gemäß einem der Ansprüche 1 bis 5, wobei das Verfahren ferner nach dem ersten Pulverisierungsschritt (S200) einen Kategorisierungsschritt (S202) des Sortierens des ersten pulverisierten manganoxidhaltigen Materials in grobe Partikel und feine Partikel über einen Trennungsdurchmesser umfasst, der in einem Bereich von 30 μm bis 150 μm festgelegt ist, wobei der erste magnetische Trennungsschritt (S204) die im Kategorisierungsschritt (S202) gruppierten groben Partikel trennt.

7. Verfahren zum Herstellen eines Mangan-Rohmaterials gemäß Anspruch 6, das ferner einen dritten magnetischen Trennungsschritt (216) zum Trennen der im Kategorisierungsschritt (S202) gruppierten feinen Teilchen in eine magnetische Substanz und eine nichtmagnetische Substanz unter einer magnetischen Kraft und einen Schritt zur Gewinnung der im dritten magnetischen Trennungsschritt getrennten magnetischen Substanz (S218) als Mangan-Rohmaterial umfasst.

8. Verfahren zum Herstellen eines Mangan-Rohmaterials gemäß einem der Ansprüche 1 bis 7, das ferner einen zweiten Pulverisierungsschritt (S208), bei dem die im ersten magnetischen Trennungsschritt (S204) abgetrennte magnetische Substanz pulverisiert wird, um ein zweites pulverisiertes manganoxidhaltiges Material zu erzeugen, einen zweiten magnetischen Trennungsschritt (S210) des Trennens des zweiten pulverisierten manganoxidhaltigen Materials, das in dem zweiten Pulverisierungsschritt (S208) erzeugt wurde, in eine magnetische Substanz und eine nicht magnetische Substanz unter einer magnetischen Kraft; und einen Schritt des Wiedergewinnens der magnetischen Substanz (S212), die in dem zweiten magnetischen Trennungsschritt (S210) getrennt wurde, als ein Mangan-Rohmaterial umfasst.

9. Verfahren zum Herstellen von manganhaltigem geschmolzenem Stahl, umfassend das Zugeben des Mangan-Rohmaterials, das durch das Verfahren zur Herstellung eines Mangan-Rohmaterials gemäß einem der Ansprüche 1 bis 8 gewonnen wurde, zu heißem Metall oder geschmolzenem Stahl, um die Mangankonzentration des heißen Metalls oder des geschmolzenen Stahls einzustellen.

**Revendications**

1. Procédé de fabrication d'une matière première de manganèse comprenant :

une première étape de pulvérisation (S200) consistant à pulvériser en compression un matériau contenant de l'oxyde de manganèse contenant au moins du manganèse, du calcium, du silicium, du fer et du phosphore, qui est utilisé en tant que matière première, pour former un composite dans lequel une phase composée constituée

de nCaO·P$_2$O$_5$ est associée à au moins une phase parmi une phase de spinelle et une phase de ferrite de calcium, lesquelles sont des matériaux ferromagnétiques, et produire un premier matériau pulvérisé contenant de l'oxyde de manganèse contenant le composite, la phase de spinelle étant du MnFe$_2$O$_4$ ;

une première étape de séparation magnétique (S204) consistant à séparer le premier matériau pulvérisé contenant de l'oxyde de manganèse produit à la première étape de pulvérisation (S200) en une substance magnétique et une substance non magnétique sous une force magnétique ; et

une étape (S206) de récupération de la substance non magnétique séparée à la première étape de séparation magnétique (S204) en tant que matière première de manganèse.

2. Procédé de fabrication d'une matière première de manganèse selon la revendication 1, dans lequel la première étape de pulvérisation (S200) pulvérise jusqu'à ce que le premier matériau pulvérisé contenant de l'oxyde de manganèse ait une taille de particule de 500 μm ou moins.

3. Procédé de fabrication d'une matière première de manganèse selon la revendication 1 ou 2, dans lequel la première étape de pulvérisation (S200) utilise le matériau contenant de l'oxyde de manganèse qui contient une phase de silicate de manganèse en tant que phase minérale.

4. Procédé de fabrication d'une matière première de manganèse selon la revendication 3, dans lequel la première étape de séparation magnétique (S204) sépare la phase de silicate de manganèse en tant que substance non magnétique par séparation sous la force magnétique qui n'entraîne pas de magnétisation de la phase de silicate de manganèse.

5. Procédé de fabrication d'une matière première de manganèse selon l'une quelconque des revendications 1 à 4, où à la première étape de séparation magnétique (S204), un champ magnétique à appliquer est un champ magnétique variable qui change dans le temps.

6. Procédé de fabrication d'une matière première de manganèse selon l'une quelconque des revendications 1 à 5, comprenant en outre, après la première étape de pulvérisation (S200), une étape de tri (S202) consistant à trier le premier matériau pulvérisé contenant de l'oxyde de manganèse en particules grossières et particules fines sur la base d'un diamètre de séparation défini de 30 μm à 150 μm, la première étape de séparation magnétique (S204) séparant les particules grossières triées à l'étape de tri (S202).

7. Procédé de fabrication d'une matière première de manganèse selon la revendication 6, comprenant en outre une troisième étape de séparation magnétique (216) consistant à séparer les particules fines triées à l'étape de tri (S202) en une substance magnétique et une substance non magnétique sous une force magnétique, et une étape (S218) de récupération de la substance magnétique séparée à la troisième étape de séparation magnétique en tant que matière première de manganèse.

8. Procédé de fabrication d'une matière première de manganèse selon l'une quelconque des revendications 1 à 7, comprenant en outre une deuxième étape de pulvérisation (S208) consistant à pulvériser la substance magnétique séparée à la première étape de séparation magnétique (S204) pour produire un deuxième matériau pulvérisé contenant de l'oxyde de manganèse ; une deuxième étape de séparation magnétique (S210) consistant à séparer le deuxième matériau pulvérisé contenant de l'oxyde de manganèse produit à la deuxième étape de pulvérisation (S208) en une substance magnétique et une substance non magnétique sous une force magnétique ; et une étape (S212) de récupération de la substance magnétique séparée à la deuxième étape de séparation magnétique (S210) en tant que matière première de manganèse.

9. Procédé de fabrication d'acier fondu contenant du manganèse comprenant l'ajout de la matière première de manganèse récupérée par le procédé de fabrication d'une matière première de manganèse selon l'une quelconque des revendications 1 à 8 à du métal chaud ou de l'acier fondu pour ajuster une concentration en manganèse du métal chaud ou de l'acier fondu.

# FIG. 1

## FIG. 2A

$Mn_3O_4$, $MnFe_2O_4$, $Fe_3O_4$

$Mn_7SiO_{12}$   $nCaO \cdot P_2O_5$

## FIG. 2B

FERROMAGNETIC COMPOUND PHASE
(e.g., $Mn_3O_4$,$MnFe_2O_4$,$Fe_3O_4$,OR $CaFe_2O_4$)

$Mn_3O_4$,$MnFe_2O_4$,$Fe_3O_4$

HIGH P PHASE

$Mn_7SiO_{12}$

## FIG. 2C

$Mn_7SiO_{12}$

## FIG. 2D

FERROMAGNETIC COMPOUND PHASE
(e.g., $Mn_3O_4$,$MnFe_2O_4$,$Fe_3O_4$,OR $CaFe_2O_4$)

$Mn_3O_4$,$MnFe_2O_4$,$Fe_3O_4$

HIGH P PHASE

HIGH P-CONTAINING
PARTICLES

FIG. 3

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7034114 A
- JP 2017205715 A
- CN 101113496 A
- GB 1002029 A
- JP 2017131869 A